# EUROPEAN PATENT SPECIFICATION

(11) **EP 0 764 129 B1**
(45) Date of publication and mention of the grant of the patent: **21.07.1999**
(21) Application number: 95922047.6
(22) Date of filing: 02.06.1995
(51) Int. Cl.: B65G 57/26

(54) **A DEVICE FOR PROVISION OF STICKERS**
VORRICHTUNG ZUM ANBRINGEN VON ABSTANDSHALTERLATTEN
DISPOSITIF DE POSITIONNEMENT DE LATTES D'ESPACEMENT

(30) Priority: 06.06.1994 SE 9401930
(43) Date of publication of application: 26.03.1997
(73) Proprietor: And. Larsson Maskin AB, 812 25 Storvik (SE)
(72) Inventor: LARSSON, P.-O., S-812 25 Storvik (SE)
(74) Representative: Bjerkén, Jarl Hakan
(86) International application number: SE9500637
(87) International publication number: WO9533670

(56) References cited:
- CA-A- 1 327 980
- DE-C- 3 844 795
- SE-B- 446 398

## Description

### FIELD OF THE INVENTION AND PRIOR ART

This invention is related to a device of the kind defined in the pre-characterising part of the enclosed claim 1. The term "sticker" comprises elongated fillet like members, which as a rule are prepared from wood although also other materials are conceivable. On stacking of timber, which later is to be dried, the stickers are often placed between each of the timber layers in the stack. Stickers may also be laid into the timber stack with the primary task to function for holding the stack together during the stacking operation. In the latter case stickers do not have to be introduced between each pair of layers of pieces in the stack.

Provision of stickers involves in practise considerable problems for the designer. This is primarily due to the fact that wood almost without exception is used as material for the stickers. Unfortunately (in the present case) wood is to a great extent a changing material. The relatively slender stickers obtain almost without exception distortions from the originally intended shape. More or less important bends, twistings etc. may be involved. These irregularities with regard to the shape of the stickers involve considerable difficulties to design sticker provision equipment operating acceptably. When there are disturbances in operation as a result of some sticker missing or some sticker having obtained a defective location, great economical values represented by all or parts of the timber in the stack in question may be lost unless the operator observes the defect in question, interrupts the operation of the device and eliminates the defect.

The device presented in the pre-characterising part of the enclosed claim 1 appears from our SE-B-446 398 and has turned out to be very satisfactory in view of the fact that the operator obtains improved possibilities to supervise and correct the provision of stickers.

In the course of natural product development, it has, however, been realised that the means for locating the stickers in their readiness position should be possible to be improved in order to increase the capacity of provision of stickers.

Another problem identified in the prior art is that the control of the device preferably could be designed to improve the possibilities to avoid introduction of unacceptable stickers in the timber stack. In this connection it is pointed out that stickers may be unacceptable due to purely mechanical defects, which already has been meantioned. Other causes may be that the stickers are too damp, contaminated with for instance mould fungus or otherwise are discoloured. An unacceptably high moisture content, contamination with mould or other discolouring of the stickers, may cause defects of timber pieces in the stack, with associated economical losses.

### SUMMARY OF THE INVENTION

The object of the present invention is primarily to develop the device known by the Swedish patent No. 8306651-4 (446 398) so that the operation of the sticker locating means is improved and thereby the capacity may be increased.

This primary object of the invention is achieved by the features according to the characterising part of claim 1. This solution enables the piece meal feeder to rapidly deliver the stickers to the conveyor during continuous operation thereof, whereupon the stop members then effect stopping of the stickers and, accordingly, location thereof in their readiness position. The stickers are then collected from this readiness positions to the stack forming station by means of the sticker transporting means.

A secondary object of the invention is to develop the device so that it becomes well suited for removing, either manually by the operator or automatically by means of a detector, unacceptable stickers such that those do not enter the stack. A particularly preferably solution is to arrange, in accordance with claim 7, a detector for detection of undesired properties of the stickers. Particularly preferred solutions for eliminating unacceptable stickers without and with respectively such a detector are defined in the appended claims 9 and 12 respectively.

Further preferable developments of the invention are defined in the rest of the dependent claims.

### SHORT DESCRIPTION OF THE DRAWINGS

With reference to the enclosed drawings, a more specific description of embodiment examples of the invention follows hereinafter.

In the drawings;
- Fig. 1: is a diagrammatical view from above of the device according to the invention;
- Fig. 2: is a diagrammatical view as viewed along the line II-II in Fig. 1;
- Fig. 3: is a diagrammatical view illustrating, in perspective, stop members included in the device;
- Fig. 4: is a block diagram illustrating the operation of the device according to the invention of Fig. 1;
- Fig. 5: is a diagrammatical side view illustrating a possible design of an apparatus for receiving stickers;
- Fig. 6: is a view comprising parts of components illustrated in Fig. 2 and also the addition of specific members for removal of unacceptable stickers; and
- Fig. 7: is a further block diagram illustrating the operation of the device intended in Fig. 6.

### DETAILED DESCRIPTION OF PREFERRED EMBODIMENTS

The device according to the invention for stacking elongated timber pieces and provision of stickers so that they become located between superposed layers of pieces in the stack comprises a stack forming station 1, a first apparatus 2 for supplying timber pieces to said station 1 and a second apparatus 3 for providing, on a layer of timber pieces in the stack, a layer consisting of a number of stickers 4 extending transversely to the timber pieces.

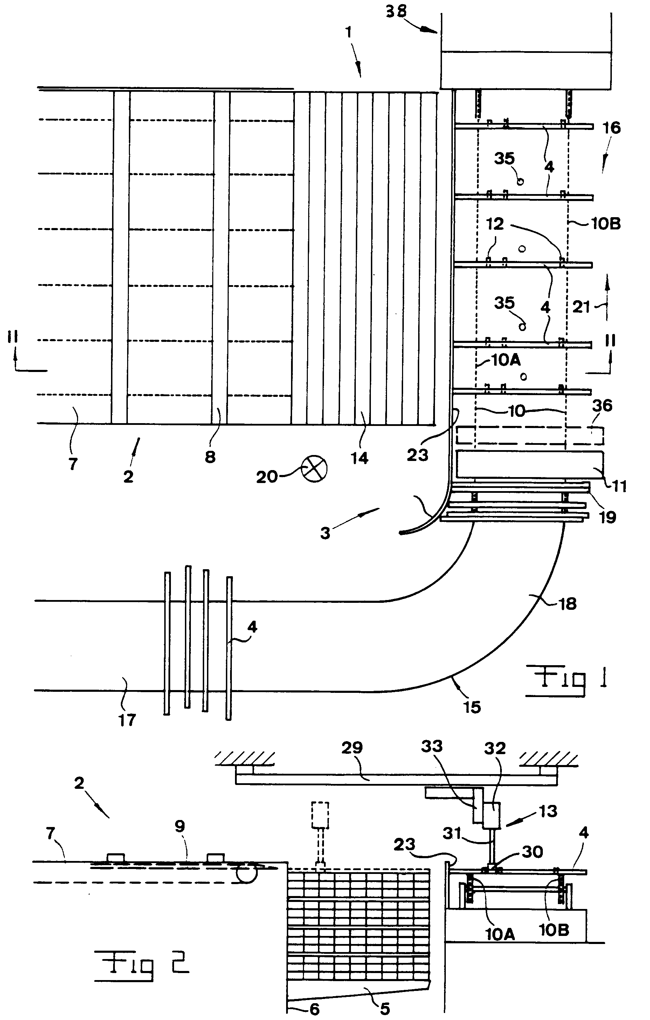

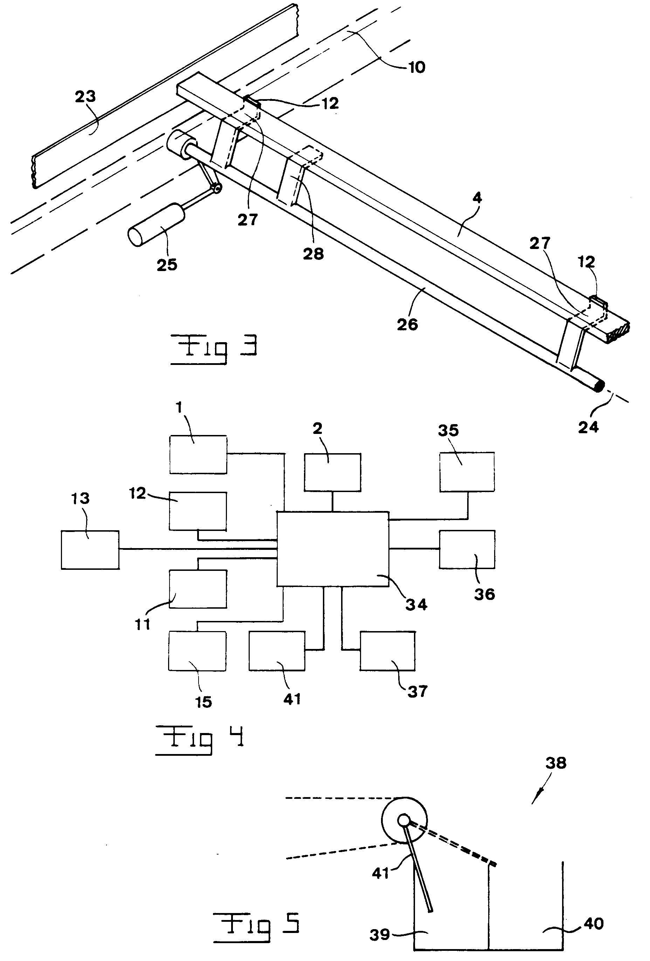

The stack forming station, which for example may be designed to operate in accordance with the applicant's Swedish patent No. 7905849-1 (420 589) comprises a support apparatus 5 for supporting the timber stack during its formation. The support apparatus 5 is movable vertically in relation to a stand 6 to locate the upper surface of the stack in substantially one and the same level. The supply apparatus 2 comprises (see Figs. 1 and 2) a conveyor 7 for transporting timber pieces 8 transversely to their longitudinal direction towards the support apparatus 5 and carrying members 9 in the form of swords or similar, which are advancable, while carrying a layer of timber pieces, to a position above the stack and which on retraction to a position beside the stack co-operate with stops, which pushes the timber pieces off the swords so that the timber pieces arrive on the upper surface of the stack. As the height of the stack increases, the support apparatus 5 is lowered. It is illustrated in Fig. 2 that stickers 4 are introduced between every third layer of timber pieces in the stack. As has been meantioned, other introduction methods are possible. The apparatus 3 comprises means 10, 11, 12 for locating the stickers intended for a layer in the timber stack in a readiness position on that side of the stack forming station which is opposite relative to the apparatus 2 for supplying timber pieces, the stickers being located, in said readiness position, substantially transversely to the longitudinal direction of the timber pieces in the stack and in a disposition corresponding to the disposition, which the stickers are intended to assume in the stack.

Furthermore, the apparatus 3 comprises sticker transporting means 13, which are separate from the apparatus 2 and arranged to transport the stickers from the readiness position to the stack forming station 1. Thus, the stickers 4 are located, in the readiness position, in a parallel relation at a distance from each other as indicated in Fig. 1 as far as the stickers 4 placed opposite to the timber stack 14 is concerned.

A sticker conveyor 15, which is included in the apparatus 3 and which is arranged for displacement of stickers to their readiness position collectively denoted 16 in Fig. 1, has a first portion 17 extending substantially parallel to the conveyor 7 and a second portion 18 forming a turn to the sticker readiness position 16 arranged in front of the stack station 1. The sticker conveyor 15 receives stickers fed out from a supply or a collection and these stickers are transported further to a buffer collection 19 located upstream the sticker readiness position 16.

The stickers 4 present in the readiness position 16 are preferably arranged to be directly visible from the place 20 normally assumed by an operator of the device during its operation. Thus, the operator may, from this place, observe that the stickers in their readiness position are in a correct number and location. Furthermore, it is preferred that the operator from this place may observe the stack forming station 1 and its upper side and also the supply apparatus 2.

The sticker locating means comprise a conveyor 10 for displacement of the stickers and a piece-meal feeder 11 for delivering stickers to the conveyor 10 piece by piece. Furthermore, the sticker locating means comprise stop member 12 adapted to stop the stickers being under displacement by means of the conveyor 10 in their readiness positions 16.

The conveyor 10 is preferably of the band or chain type and designed for displacement of the stickers transversely to their longitudinal direction in the direction of the arrow 21 in Fig. 1. The conveyor 10 is suitably formed by two mutually separated part conveyors 10A and 10B respectively. The diagrammatically indicated piece-meal feeder 11 is adapted to deliver the stickers one by one with regular intervals to the conveyor 10.

As is diagrammatically indicated at 22, an apparatus for locating the ends flush with each other may be present to locate the ends of the stickers in one and the same substantially vertical plane transverse relative to the longitudinal directions of the stickers. This apparatus for obtaining ends flush with each other may in reality have the character of a path for moving the stickers endwise so as to apply the ends of the stickers against a plane 23 for locating the ends flush with each other, said location preferably occurring upstreams of the piece-meal feeder 11.

As appears from Fig. 3, the stop members 12 suitably have the character of elevatable hooks 12. Expressed in other words, these stop members 12 are operable between active sticker stopping positions illustrated in Fig. 3 and inactive positions, in which stickers under displacement by means of the conveyor 10, only a part 10A of which is illustrated in Fig. 3, may pass the stop members. The stop members 12 are designed to move vertically during the operation between their active and inactive positions. In the embodiment the stop members 12 are conceived to be rotatable about an axis 24 by means of a suitable power exerting member 25, such as for instance a cylinder. In the embodiment the stop members 12 are rigidly secured to a concrete axle 26, which by means of the power member 25 is rotatable reciprocatingly so as to raise and lower the stop members. The stop members 12 are located in the area between the part conveyors 10A and 10B of the conveyor 10.

The stop members 12 may be designed so as to comprise stopping hook portions, which stop the sticker in question by contacting the vertical forward side thereof without in any way influencing the sticker upwardly, which means that the sticker is held back and will slide relative to the conveyor. However, it is also possible for the stop members 12 to comprise, as indicated in Fig. 3, portions 27 adapted to subject the sticker to an elevating influence; the function may be such that the sticker in question is intended to be entirely elevated from the conveyor 10 or possibly only somewhat so that it possibly still remains in some contact with the conveyor. As appears from Fig. 3, there may be a further member 28 in the area between the two stop members 12, said further member being operable together with the stop members 12, although it does not have any stopping function but only a function to lift the sticker 4 from below.

The readiness position 16 for the stickers 4 is arranged in front of the stack forming station 1 (see Fig. 1), i.e. on that side of the station 1 which is opposite relative to the supply apparatus 2. The means 13 for transporting the stickers are movable substantially parallel transversely to the longitudinal direction of the formed stack 14. The transporting means 13 are movable along one or more guides 29 located in the area above the readiness position 16 for the stickers and the stack forming station 1 and extending substantially horizontally and perpendicularly to the longitudinal direction of the stack. The means 13 which are arranged one for each of the stickers 4 to be placed on the stack, comprise lower pliers-like gripping members 30 designed to grip the stickers. These gripping members are in their turn arranged on a part 31, which by means of for instance a cylinder 32 is vertically movable relative to a base part 33 movable along the guide 29 by means not illustrated more closely. It is preferred that the various transporting means 13 are provided on a common base part 33 movable along the guide 29. It is then preferred that the individual sticker transporting means 13 are adjustable on this base part 33 so as to be adaptable to the desired sticker disposition in the stack.

It is preferred that the sticker transporting means 13 are arranged to grip the stickers present in the readiness positions 16 relatively close to one of the stop members 12 and more specifically in the area between a stop member 12 and the support member 28. Since the sticker 4 in the preferred case is supported from below by the stop member 12 as well as the support member 28, this means that the sticker position will be well defined in the area between the support member 28 and the adjacent stop member 12.

For controlling the operation of the device there is a control unit 34, for instance a computer. As appears from Fig. 4, this control unit 34 is adapted to control the diagrammatically indicated stop members 12 and the piece meal feeder 11 and the conveyor 15 conveying the stickers thereto. Furthermore it appears that the control unit 34 controls the sticker transporting means 13 and stack forming station 1 and the supply apparatus 2 for timber pieces.

The control unit 34 for controlling the operation of the stop members 12 is adapted to relate this control as far as time is concerned to the operation of the piece-meal feeder 11 so that stop members 12 pre-destinated for a specific sticker are activated before the sticker is displaced past these stop members by means of the conveyor 10 but after the sticker having been displaced past the stop members which are located most closely upstreams thereof and which then are inactivated.

Another embodiment is based upon the device comprising sensing members (Figs. 1 and 4) denoted 35 adapted to sense passage of stickers displaced by the conveyor 10. These sensing members 35 are connected to the control unit 34. The sensing members 35 are adapted to sense passage of the stickers past the stop members 12 and deliver corresponding information to the control unit 34, which by means of such information activates the stop members so that stop members 12 pre-destinated for a sticker 4 in question are activated when this sticker in question has passed second stop members located upstreams of said pre-destinated stop members and/or when a sticker preceding said sticker in question has passed the pre-destinated stop members 12. Independently of the control method which is applied, the piece-meal feeder 11 will , accordingly, deliver the stickers one by one to the conveyor 10, which displaces them further whereas the stop members 12 are activated to their stopping positions so that the stickers reach their intended pre-determined readiness positions.

A detector 36 is arranged to automatically detect undesired properties of the stickers 4 before they arrive to the readiness position 16 and deliver corresponding information to the control unit. This is in turn adapted to control the device to avoid transportation of unacceptable stickers to the stack forming station.

The detector 36 may have very different design and properties. It may be designed to detect mechanical defects, for instance in the form of fractures, pitching etc. In such a case the detector could have the character of a camera or similar connected to an assessment unit suitable for the purpose. The detector 36 may also be capable of sensing the moisture of the stickers or presence of mould thereon. Also other discolouring may be sensed by the detector.

As appears from Fig. 4, the device is intended to comprise an operating member 37 manually actuatable by an operator, said operating member being connected to the control unit 34 and adapted to be actuated on occurrence of a sticker having such undesired properties that the sticker is unacceptable. The control unit 34 is arranged to control, on such actuation, the device to avoid transportation of unacceptable stickers to the stack forming station 1.

The control unit 34 may then be arranged to process the signals of the detector 36 and the operating member 37 in parallel so that whenever a signal indicating an unacceptable sticker is obtained from the detector 36 or the operating member 37, the control unit 34 ensures that the sticker in question is not transported to the stack forming station.

The device may then be such that the control unit 34 is adapted to control the stop members 12, on occurrence of an unacceptable sticker amongst the stickers intended for a layer, for the unacceptable sticker and at least the stickers located downstream thereof to be inactivated so that the conveyor 10 displaces the unacceptable sticker and at least those stickers that are located downstream thereof past the readiness position 16. Expressed in other words, the unacceptable sticker and the stickers located downstream thereof in the set which belongs to a layer between timber pieces in the stack will, thus, be moved away from the readiness position 16. As long as the unacceptable sticker is not the one which is located mostly downstream amongst those which are included in the layer in question, this will necessarily mean that one or more stickers acceptable per se also will be displaced past the readiness position. For this purpose a sticker receiving apparatus 38 (Figs. 1, 4 and 5) is arranged at the downstream end of the conveyor 10, said apparatus comprising at least two receivers 39, 40, one of which is intended for unacceptable stickers and the other for the acceptable stickers. This receiving apparatus 38 is co-ordinated with a selector 41 to selectively cause stickers to arrive to one or the other of the receivers 39, 40. The selector 41, which in Fig. 5 is illustrated as a pivotably arranged guide flap, is, accordingly, controlled by the control unit 34 dependent on information from the detector 36 and/or the operating member 37 so that there will be only unacceptable stickers in one of the receivers 39, 40 whereas there will be present, in the other receiver, acceptable stickers. The receivers 39, 40 are suitably co-ordinated with conveyors, discharging equipment or similar to successively or batchwise discharge stickers from the receiving apparatus 38.

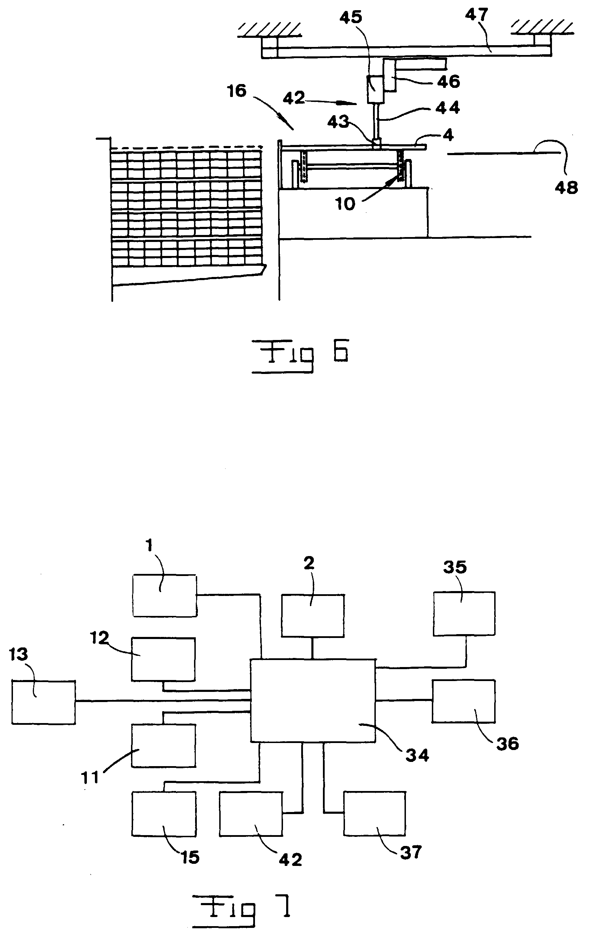

In the variant in Fig. 6, it is illustrated that the device comprises one or more members 42 controlled by the control unit 34, said members being adapted for removal of unacceptable stickers, while the stickers are being held in their readiness positions by the stop members. The sticker removal member 42 comprises, similar to the sticker transporting means 13, pliers-like gripping members 43 for gripping the stickers 4. The gripping member 43 is arranged on a vertically movable part 44, which is operated by means of a suitable power member 45, for instance a cylinder. The sticker removal member 42 is arranged on a base part 46, which is movable along a guide 47 in a direction substantially parallel to the longitudinal direction of the stickers in their readiness position. The device may be such that for each of the stickers intended to be in a readiness position, there is a specific sticker removal member 42, these members 42 being operable individually or collectively. In case there is one single sticker removal member 42, the same must be movable transversely to the longitudinal direction of the stickers present in the readiness position in the order to be able to be located in front of the sticker which is unacceptable and therefore should be removed.

The removal members 42 are arranged to move the stickers away from the readiness position 16 in a direction substantially opposite to the direction, in which the stickers are transported to the stack forming station by means of the sticker transporting means 13. In Fig. 6 there is diagrammatically illustrated a receiver 48, on which unacceptable stickers removed from the readiness position 16 are intended to be placed by means of the occurring sticker removal member(-s) 42. The receiver 48 may then consist of or comprise some kind of conveyor, container or similar for continuous or batchwise discharge of the unacceptable stickers.

When an individual sticker or several stickers have been removed from the readiness position 16 in the embodiment according to Fig. 6, the control unit 34 will control the piece-meal feeder 11 and the stop members 12 so that the sticker vacancies obtained are provided with fresh stickers.

The block diagram illustrated in Fig. 7 corresponds to that illustrated in Fig. 4 with the exception that sticker removal members 42 are under control of the control unit 34.

The device illustrated in Figs. 1-5 operates in the following way: timber pieces are transported on the conveyor 7 in a direction towards the stack forming station 1 and are laid out therein to a stack layer by layer. By a suitable co-ordination of the operation of the apparatus 2 for supply of timber pieces and the apparatus 3 for provision of stickers on the stack, layers of stickers may be obtained between desired timber layers in the stack. Stickers arrive on the conveyor 15 and are gathered to a butter store 19 thereon. As soon as stickers present in a readiness position 16 have been gripped, lifted and transported away from the readiness position by means of the transporting means 13, the control unit 34 controls the piece-meal feeder 11 to deliver a number of stickers corresponding to the desired number in the sticker layer with intervals. These stickers are displaced by the conveyor 10 towards their readiness position and are stopped therein by means of the stop members 12. When the sticker transporting means 13 have delivered the stickers in the preceding sticker layer on the timber stack, the sticker transporting means 13 are returned and they grip the stickers now present in the readiness position and lift the same again. The operation proceeds in this way while the stack is formed. During this operation the detector 35 operates for detection of undesired properties of the stickers. At the same time the operator has the possibility to actuate the operating member 37 should he visually register some undesired property of some sticker. If a sticker for a sticker layer would be registered as unacceptable, the control unit 34 will automatically control the stop members 12 so that this sticker and all stickers located downstream thereof will be displaced further to the receiving apparatus 38 by means of the conveyor 10 at the same time as the control unit 34 controls the piece-meal feeder 11 to deliver to the conveyor 10 an extra number of stickers corresponding to the sticker number delivered to the receiving apparatus 38.

The operation in the embodiment according to Figs. 6 and 7 is the corresponding with the exception that here only unacceptable stickers are picked away by means of the sticker removal members 42 and delivered to the receiver 48. The stickers removed are replaced by a corresponding control of the piece-meal feeder 11 and the stop members located upstream of the place for the removed sticker, so that the sticker layer comes complete before the sticker transporting means 13 (not illustrated in Fig. 6) grip, lift and transport the stickers in the layer to the stack forming station.

The device described may of course be modified in several ways within the scope of the claims.

## Claims

1. A device for the provision of stickers between the layers of elongated timber pieces in a stack (14), said layers being located above each other, said stack being formed in a stack forming station (1), to which the timber pieces are intended to be supplied substantially perpendicularly to their longitudinal direction by means of a first apparatus (2), said device comprising a second apparatus (3) for providing, on a layer of timber pieces in the stack, a layer consisting of a number of stickers extending transversely to the timber pieces, said second apparatus comprising means (10, 11, 12), for locating the stickers intended for a layer in a readiness position (16) on that side of the stack forming station (1) which is opposite to the apparatus (2) for supplying timber pieces, in which readiness position the stickers are located substantially transversely to the longitudinal direction of the timber pieces in the stack and in a disposition corresponding to the disposition, which the stickers are intended to assume in the stack, and sticker transporting means (13) for transporting the stickers from the readiness position to the stack forming station, the sticker locating means comprising a conveyor (10) for displacement of the stickers and a piece-meal feeder (11) for delivering stickers one at a time to the conveyor (10), characterized in that the sticker locating means comprises stop members (12) arranged to stop the stickers in their respective readiness positions and being individually operable between active sticker stopping positions and inactive positions, in which stickers under displacement by means of the continuously operating conveyor (10) may pass the stop members, and that the stop members (12) are arranged to stop the stickers being displaced by the conveyor (10) in their respective readiness positions by the stop members for the different stickers being brought into their active positions.

2. A device according to claim 1, characterized in that the stop members (12) have the character of elevatable hooks.

3. A device according to claim 1 or 2, characterized in that the stop members (12) are controlled by a control unit (34).

4. A device according to claim 3, characterized in that the piece-meal feeder (11) is controlled by the control unit (34).

5. A device according to claim 1 or 2, characterized in that a control unit (34) for controlling the operation of the stop members (12) is adapted to relate this control to the operation of the piece meal feeder (11) as far as time is concerned so that stop members (12) pre-destinated to a certain sticker are activated before the sticker has been displaced past these stop members by means of the conveyor (10) but after the sticker having been displaced past the stop members, which are located most adjacent and upstream and which then are inactivated.

6. A device according to claim 1 or 2, characterized in that it comprises sensing members (35) adapted to sense passage of stickers displaced by the conveyor (10), that these sensing members (35) are connected to a unit (34) controlling the operation of the stop members and that the sensing members are arranged to sense passage of the stickers past the stop members and deliver corresponding information to the control unit, which by means of such information activates the stop members (12) so that stop members (12) pre-destinated for a sticker in question are activated when this sticker in question has passed second stop members located upstream said pre-destinated stop members and/or when a sticker preceding said sticker in question has passed the pre-destinated stop members.

7. A device according to any of claims 3-6, characterized in that a detector (36) is adapted to automatically detect undesired properties of the stickers before they arrive to the readiness position and deliver corresponding information to the control unit, and that the control unit is adapted to control the device to avoid displacement of unacceptable stickers to the stack forming station.

8. A device according to any of claims 3-6, characterized in that it comprises an operating member (37) manually actuatable by an operator, said operating member being connected to the control unit (34) and adapted to be actuated on occurrence of a sticker having such undesired properties that the sticker is unacceptable, and that the control unit (34) is arranged to control, on such actuation, the device to avoid displacement of unacceptable stickers to the stack forming station.

9. A device according to claim 7 or 8, characterized in that the control unit (34) is adapted to control, on occurrence of an unacceptable sticker amongst the stickers intended for a layer, the stop members (12) for the unacceptable sticker and for at least the stickers located downstream thereof to be inactivated such that the conveyor displaces the unacceptable sticker and at least the stickers located downstream thereof past the readiness position (16).

10. A device according to claim 9, characterized in that a sticker receiving apparatus (38) is arranged at the downstream end of the conveyor (10).

11. A device according to claim 10, characterized in that the sticker receiving apparatus (38) comprises at least two receivers (39, 40) and is co-ordinated with a selector (41) to selectively cause the stickers to arrive to one or the other of the receivers.

12. A device according to claim 7 or 8, characterized in that it comprises one or more members (42) controlled by the control unit (34) and adapted for removal of unacceptable stickers while the stickers are held in their readiness positions by means of the stop members (12).

13. A device according to claim 12, characterized in that the removal members (42) are adapted to move the stickers away from the readiness position (16) in a direction substantially opposite to the direction, in which the stickers are transported to the stack forming station (1) by means of the sticker transporting means (13).

14. A device according to claim 13, characterized in that the removal members (42) comprise means (43, 44, 45) for gripping and lifting of the stickers.

## Patentansprüche

1. Vorrichtung zum Verbringen von Latten zwischen übereinander angeordneten Lagen von Langholzstücken in einem Stapel (14), wobei der Stapel in einer Stapelaufbaustation (1) aufgebaut wird, zu welcher die Holzstücke mittels einer ersten Einrichtung (2) im wesentlichen senkrecht zu ihrer Längsrichtung hinführbar sind, und die Vorrichtung eine zweite Einrichtung (3) zum Verbringen einer Lage aus einer Anzahl von quer zu den Holzstücken verlaufenden Latten auf eine Lage von Holzstücken in dem Stapel umfaßt, wobei die zweite Einrichtung Mittel (10, 11, 12) zum Bestimmen des Ortes der für eine Lage vorgesehenen Latten in einer Bereithaltungsposition (16) an derjenigen Seite der Stapelaufbaustation (1), die der Einrichtung (2) zum Zuführen der Holzstücke gegenüber liegt, wobei die Latten in dieser Bereithaltungsposition im wesentlichen quer zu der Längsrichtung der Holzstücke in dem Stapel angeordnet sind und eine Anordnung einnehmen, die der Anordnung entspricht, die die Latten in dem Stapel einnehmen sollen, und Latten-Transportmittel (13) zum Transportieren der Latten von der Bereithaltungsposition zu der Stapelaufbaustation umfaßt, wobei das Lattenortsbestimmungsmittel einen Förderer (10) zum Verlagern der Latten und einen Stückzuführer (11) zum stückweisen Zuführen einzelner Latten zu dem Förderer (10) umfaßt, dadurch gekennzeichnet, daß das LattenOrtsbestimmungsmittel Halteteile (12) umfaßt, die ausgelegt sind, die Latten in ihren jeweiligen Bereithaltungspositionen zu halten, und die einzeln zwischen aktiven Lattenhaltepositionen und inaktiven Lattehaltepositionen, in denen Latten, die mittels des kontinuierlich arbeitenden Förderers (10) verlagert werden, die Halteteile passieren können, betätigbar sind, und daß die Halteteile (12) ausgelegt sind, die von dem Förderer (10) verlagerten Latten an ihren jeweiligen Bereithaltungspositionen anzuhalten, indem die Halteteile für die unterschiedlichen Latten in ihre aktiven Positionen gebracht werden.

2. Vorrichtung nach Anspruch 1, dadurch gekennzeichnet, daß die Halteteile (12) in Art von emporhebbaren Haken ausgebildet sind.

3. Vorrichtung nach Anspruch 1 oder 2, dadurch gekennzeichnet, daß die Halteteile (12) durch eine Steuereinheit (34) gesteuert werden.

4. Vorrichtung nach Anspruch 3, dadurch gekennzeichnet, daß der Stückzuführer (11) von der Steuereinheit (34) gesteuert wird.

5. Vorrichtung nach Anspruch 1 oder 2, dadurch gekennzeichnet, daß eine Steuereinheit (34) zum Steuern des Betriebs der Halteteile (12) ausgelegt ist, diese Steuerung zeitlich mit dem Betrieb des Stückzuführers abzustimmen, derart, daß die für eine bestimmte Latte vorgesehenen Halteteile (12) aktiviert werden, bevor die Latte mittels des Förderers (10) über diese Halteteile hinweg verlagert wurde, aber nachdem die Latte über die stromaufwärts nächstbenachbarten Halteteile hinweg verlagert wurde, welche dann inaktiviert sind.

6. Vorrichtung nach Anspruch 1 oder 2, dadurch gekennzeichnet, daß sie Erfassungsteile (35) umfaßt, die zur Erfassung des Vorbeilaufens von von dem Förderer (10) verlagerten Latten vorgesehen sind, daß diese Erfassungsteile (35) mit einer den Betrieb der Halteteile steuernden Einheit (34) verbunden sind, und daß die Erfassungsteile ausgelegt sind, das Vorbeilaufen der Latten über die Halteteile hinweg zu erfassen und der Steuereinheit entsprechende Informationen zu liefern, welche mittels derartiger Informationen die Halteteile (12) so aktiviert, daß für eine fragliche Latte vorgesehene Halteteile (12) aktiviert sind, wenn diese fragliche Latte an zweiten Halteteilen vorbeigelaufen ist, welche sich stromaufwärts der vorgesehenen Halteteile befinden und/oder wenn eine Latte, welche der fraglichen Latte vorausläuft, an den vorgesehenen Halteteilen vorbeigelaufen ist.

7. Vorrichtung nach einem der Ansprüche 3 bis 6, dadurch gekennzeichnet, daß ein Detektor (26) dazu ausgelegt ist, bevor die Latten die Bereithaltungsposition erreicht haben, automatisch unerwünschte Eigenschaften der Latten zu detektieren und entsprechende Informationen der Steuereinheit zuzuführen, und daß die Steuereinheit ausgelegt ist, die Vorrichtung so zu steuern, daß eine Verlagerung von inakzeptablen Latten zu der Stapelaufbaustation vermieden wird.

8. Vorrichtung nach einem der Ansprüche 3 bis 6, dadurch gekennzeichnet, daß sie ein von einer Bedienperson manuell betätigbares Bedienteil (37) umfaßt, wobei das Bedienteil mit der Steuereinheit (34) verbunden ist und beim Auftreten einer Latte mit derart unerwünschten Eigenschaften, daß die Latte inakzeptabel ist, betätigbar ist, und daß die Steuereinheit (34) bei einer solchen Betätigung eine Steuerung der Vorrichtung ermöglicht, welche die Verlagerung von inakzeptablen Latten zu der Stapelaufbaustation verhindert.

9. Vorrichtung nach den Ansprüchen 7 oder 8, dadurch gekennzeichnet, daß die Steuereinheit (34) ausgelegt ist, beim Auftreten einer inakzeptablen Latte unter den für eine Lage vorgesehenen Latten die Halteteile (12) für die inakzeptable Latte und zumindest für die stromabwärts von dieser befindlichen Latten so zu steuern, daß diese deaktiviert werden, derart, daß der Förderer die inakzeptable Latte und zumindest die stromabwärts davon befindlichen Latten über die Bereithaltungsposition (16) hinweg verlagert.

10. Vorrichtung nach Anspruch 9, dadurch gekennzeichnet, daß eine Empfangseinrichtung (38) für Latten an dem stromabwärtsseitigen Ende des Förderers (10) angeordnet ist.

11. Vorrichtung nach Anspruch 10, dadurch gekennzeichnet, daß die Empfangseinrichtung (38) für Latten wenigstens zwei Empfangseinheiten (39, 40) umfaßt und von einer Wahleinheit (41) koordiniert wird, die bewirkt, daß die Latten wahlweise an der einen oder der anderen Empfangseinheit ankommen.

12. Vorrichtung nach Anspruch 7 oder 8, dadurch gekennzeichnet, daß sie ein oder mehrere von der Steuereinheit (34) gesteuerte Teile (42) umfaßt, die zum Entfernen von inakzeptablen Latten vorgesehen sind, während die Latten mittels der Halteteile (12) an ihren Bereithaltungspositionen gehalten werden.

13. Vorrichtung nach Anspruch 12, dadurch gekennzeichnet, daß die Entfernungsteile (42) ausgelegt sind, die Latten in einer Richtung von der Bereithaltungsposition (16) wegzubewegen, die der Richtung, in der die Latten mittels des Latten-Transportmittels (13) zu der Stapelaufbaustation (1) transportiert werden, im wesentlichen entgegengesetzt ist.

14. Vorrichtung nach Anspruch 13, dadurch gekennzeichnet, daß die Entfernungsteile (42) Mittel (43, 44, 45) zum Greifen und Anheben der Latten umfassen.

## Revendications

1. Dispositif pour placer des lattes d'espacement entre les couches de pièces de bois d'oeuvre allongées dans une pile (14), ces couches étant positionnées l'une sur l'autre, la pile étant formée à un poste de formation de pile (1), auquel les pièces de bois d'oeuvre sont destinées à être acheminées sensiblement perpendiculairement à leur direction longitudinale au moyen d'un premier appareil (2), le dispositif comprenant un second appareil (3) pour positionner, sur une couche de pièces de bois d'oeuvre dans la pile, une couche consistant en un certain nombre de lattes d'espacement s'étendant transversalement aux pièces de bois d'oeuvre, le second appareil comprenant des moyens (10, 11, 12) pour positionner les lattes d'espacement prévues pour une couche dans une position préparatoire (16) du côté du poste de formation de pile (1) qui est opposé à l'appareil (2) pour acheminer les pièces de bois d'oeuvre, position préparatoire dans laquelle les lattes d'espacement sont positionnées sensiblement transversalement à la direction longitudinale des pièces de bois d'oeuvre dans la pile et dans une disposition correspondant à la disposition que les lattes d'espacement sont destinées à prendre dans la pile, et des moyens transporteurs de lattes (13) pour transporter les lattes d'espacement de la position préparatoire au poste de formation de piles, les moyens de positionnement des lattes comprenant un convoyeur (10) pour déplacer les lattes d'espacement et un alimentateur pièce à pièce (11) pour fournir des lattes d'espacement une par une au convoyeur (10), caractérisé en ce que les moyens de positionnement des lattes comprennent des organes de butée (12) agencés pour arrêter les lattes d'espacement dans leurs positions préparatoires respectives et pouvant être actionnés individuellement entre des positions actives d'immobilisation d'une latte, et des positions inactives dans lesquelles des lattes d'espacement subissant un déplacement au moyen du convoyeur fonctionnant en continu peuvent dépasser les organes de butée, et en ce que les organes de butée (12) sont agencés pour arrêter les lattes d'espacement en train d'être déplacées par le convoyeur (10) dans leurs positions préparatoires respectives par passage des organes de butée pour les différentes lattes dans leurs positions actives.

2. Dispositif selon la revendication 1, caractérisé en ce que les organes de butée (12) ont le caractère de crochets relevables.

3. Dispositif selon la revendication 1 ou 2, caractérisé en ce que les organes de butée (12) sont commandés par une unité de commande (34).

4. Dispositif selon la revendication 3, caractérisé en ce que l'alimentateur pièce à pièce (11) est commandé par l'unité de commande (34).

5. Dispositif selon la revendication 1 ou 2, caractérisé en ce qu'une unité de commande (34) pour commander le fonctionnement des organes de butée (12) est adaptée à coordonner en temps cette commande avec le fonctionnement de l'alimentateur pièce à pièce (11) de sorte que des organes de butée (12) prédestinés à une certaine latte d'espacement sont activés avant que la latte d'espacement ait été emmenée au-delà de ces organes de butée au moyen du convoyeur (10) mais après que la latte d'espacement a dépassé les organes de butée qui sont les plus adjacents en amont et qui sont ensuite inactivés.

6. Dispositif selon la revendication 1 ou 2, caractérisé en ce qu'il comprend des organes détecteurs (35) adaptés à détecter le passage des lattes d'espacement déplacées par le convoyeur (10), en ce que ces organes détecteurs (35) sont reliés à une unité (34) commandant le fonctionnement des organes de butée, et en ce que les organes détecteurs sont agencés pour détecter le passage des lattes d'espacement au-delà des organes de butée et fournir des informations correspondantes à l'unité de commande, laquelle, au moyen des ces informations, active les organes de butée (12) de sorte que des organes de butée (12) prédestinés pour une latte d'espacement en question sont activés lorsque cette latte d'espacement en question a dépassé des seconds organes de butée situés en amont desdits organes de butée prédestinés et/ou lorsqu'une latte d'espacement précédant ladite latte d'espacement en question a dépassé les organes de butée prédestinés.

7. Dispositif selon l'une quelconque des revendications 3 à 6, caractérisé en ce qu'un détecteur (36) est adapté à détecter automatiquement des propriétés indésirables des lattes d'espacement avant qu'elles atteignent la position préparatoire et à délivrer des informations correspondantes à l'unité de commande, et en ce que l'unité de commande est adaptée à commander le dispositif pour éviter le déplacement de lattes d'espacement inacceptables vers le poste de formation de pile.

8. Dispositif selon l'une quelconque des revendications 3 à 6, caractérisé en ce qu'il comprend un organe fonctionnel (37) pouvant être actionné manuellement par un opérateur, cet organe fonctionnel étant relié à l'unité de commande (34) et adapté à être actionné en cas d'une latte d'espacement ayant des propriétés indésirables telles que la latte d'espacement est inacceptable, et en ce que l'unité de commande (34) est agencée pour, en cas d'un tel actionnement, commander le dispositif pour éviter le déplacement de lattes d'espacement inacceptables vers le poste de formation de pile.

9. Dispositif selon la revendication 7 ou 8, caractérisé en ce que l'unité de commande (34) est adaptée pour, en cas d'une latte d'espacement inacceptable parmi les lattes d'espacement prévues pour une couche, commander la désactivation des organes de butée (12) pour la latte d'espacement inacceptable et pour au moins les lattes d'espacement disposées en aval de celle-ci, de façon que le convoyeur déplace la latte d'espacement inacceptable et au moins les lattes d'espacement situées en aval de celle-ci au-delà de la position préparatoire (16).

10. Dispositif selon la revendication 9, caractérisé en ce qu'un appareil récepteur de lattes (38) est agencé à l'extrémité aval du convoyeur (10).

11. Dispositif selon la revendication 10, caractérisé en ce que l'appareil récepteur de lattes (38) comprend au moins deux récepteurs (39, 40) et est coordonné avec un sélecteur (41) pour faire sélectivement arriver les lattes d'espacement à l'un ou à l'autre des récepteurs.

12. Dispositif selon la revendication 7 ou 8, caractérisé en ce qu'il comprend un ou plusieurs organes (42) commandés par l'unité de commande (34) et adaptés pour enlever des lattes d'espacement inacceptables tandis que les lattes d'espacement sont maintenues dans leurs positions préparatoires au moyen des organes de butée (12).

13. Dispositif selon la revendication 12, caractérisé en ce que les organes d'enlèvement (42) sont adaptés pour enlever les lattes d'espacement de la position préparatoire (16) dans une direction sensiblement opposée à la direction dans laquelle les lattes d'espacement sont transportées au poste de formation de pile (1) au moyen des moyens transporteurs de lattes (13).

14. Dispositif selon la revendication 13, caractérisé en ce que les organes d'enlèvement (42) comprennent des moyens (43, 44, 45) pour saisir et soulever les lattes.
